# EUROPÄISCHE PATENTANMELDUNG

(11) **EP 0 608 727 A1**
(43) Veröffentlichungstag der Anmeldung: **03.08.1994**
(21) Anmeldenummer: 94100532.4
(22) Anmeldetag: 14.01.1994
(51) Int. Cl.: B60P 1/64, B60P 3/22

(54) **Nutzfahrzeug mit einem Behälter für schütt- oder fliessfähiges Gut**

(30) Priorität: 23.01.1993 DE 9300900 U
(71) Anmelder: FELDBINDER & BECKMANN FAHRZEUGBAU oHG, D-21423 Winsen (DE)
(72) Erfinder: Beckmann, Jan-Dirk, D-21423 Winsen/Luhe (DE); Feldbinder, Ottor, D-29643 Neuenkirchen (DE)
(74) Vertreter: Richter, Werdermann & Gerbaulet

(57) **Zusammenfassung**

Um ein Nutzfahrzeug (100) mit einem Behälter (11) für schütt- oder fließfähiges Gut, der mittels einer an mindestens einem Angreifpunkt (26) mit dem Behälter (11) verbindbaren Hubeinrichtung (23) gegenüber dem Fahrzeugrahmen (10) des Nutzfahrzeugs (100) um eine im Bereich der Hinterkante (25) des Fahrzeugrahmens (10) angeordnete, an Verbindungspunkten (27) mit dem Behälter (11) verbindbaren Schwenkachse (24) schwenkbar ist, so weiterzubilden, daß ein Einsatz im kombinierten Verkehr möglich ist, wird vorgeschlagen, daß der Behälter (11) an den Angreifpunkten (26) der Hubeinrichtung (23) und an den Verbindungspunkten (27) mit der an dem Fahrzeugrahmen (10) angeordneten Schwenkachse (24) Eckstücke (15,16,17,18) nach Art der ISO-Ecken aufweist und über Schnellverschlüsse (19,20,21,22) mit der Hubeinrichtung (23) bzw. mit der Schwenkachse (24) lösbar verbindbar ist.

## Beschreibung

Die Erfindung betrifft ein Nutzfahrzeug mit einem Behälter für schütt- oder fließfähiges Gut, der mittels einer an mindestens einem Angreifpunkt mit dem Silobehälter verbindbaren Hubeinrichtung gegenüber dem Fahrzeugrahmen des Nutzfahrzeugs um eine im Bereich der Hinterkante des Fahrzeugrahmens angeordnete Schwenkachse schwenkbar ist.

Nutzfahrzeuge dieser Art sind in den verschiedensten Ausführungen bekannt. So ist beispielsweise mit der DE-OS 36 10 263 ein Transportfahrzeug vorgeschlagen worden, mit dem ein auf dem Fahrzeugrahmen angeordneter Behälter um eine Schwenkachse soweit verschwenkt werden kann, daß der Behälter neben dem Fahrzeug absetzbar ist. Dabei ist der Behälter über eine Befestigungseinrichtung mit der Schwenk- bzw. Ladevorrichtung des Transportfahrzeuges verbunden.

Es ist weiterhin bekannt, Ladungsbehälter, d.h. Großbehälter, als sog. Container auszubilden. Hierbei handelt es sich um passive, also nicht selbstbewegliche Transportgefäße, die zur Beförderung von Waren durch ein oder insbesondere mehrere Verkehrsmittel ohne zwischengeschaltetes Umladen des Containerinhaltes dienen und die mit standardisierten Einrichtungen versehen sind, um eine rationalle Handhabung, insbesondere beim Umladen von einem Beförderungsmittel auf ein anderes, zu ermöglichen. Solche Container bestehen in der Regel aus einem Containerrahmen, den Stirn- und Seitenwänden, der Dach- und Bodenkonstruktion sowie den Be- und Entladeöffnungen. Solche Container haben im Regelfall eine quaderförmige Grundform und sind an ihren insgesamt acht Ecken mit Eckstücken, nämlich mit sog. Iso-Ecken versehen, die sowohl zum Kuppeln der Container auf dem Containertransportmittel als auch zum Kuppeln der Container untereinander einsetzbar sind. Die Container werden dabei auf einem Containertransportmittel üblicherweise mit an sich bekannten Schnellverschlüssen, nämlich beispielsweise den auf Schiffen eingesetzten Bottom Fittings befestigt.

Der große Vorteil eines solchen Containers besteht darin, daß er problemlos im sog. kombinierten Verkehr eingesetzt werden kann, d.h., ein Container kann auf seinem Beförderungsweg per Bahn, per LKW, per Schiff und per Flugzeug befördert werden.

Die heute verwendeten Tank- oder Silobehälter auf LKW sind zwar schon bisher um eine Schwenkachse schwenkbar angeordnet, um die Entladung und Reinigung zu ermöglichen, jedoch ist es bisher nicht möglich, einen derartigen Silobehälter im kombinierten Verkehr einzusetzen.

Es ist zwar bereits vorgeschlagen worden, Tankbehälter innerhalb eines Containerrahmens anzuordnen, jedoch nutzt eine derartige Anordnung nicht den vorhandenen Raum, was schon insofern von Nachteil ist, als die Höhe, Breite und Länge bei einem Nutzfahrzeug entsprechenden Begrenzungen durch die Straßenverkehrsordnung unterliegt (DE-OS 41 00 010).

Es ist daher Aufgabe der vorliegenden Erfindung, ein Nutzfahrzeug der eingangs genannten Art, also insbesondere ein Tank- oder Silofahrzeug so weiterzubilden, daß ein Einsatz im kombinierten Verkehr möglich ist.

Diese Aufgabe wird durch die im Anspruch 1 gekennzeichneten Merkmale gelöst.

Es ist dabei vorgesehen, daß der Behälter an den Angreifpunkten der Hubeinrichtung und an den Verbindungspunkten mit der an dem Fahrzeugrahmen angeordneten Schwenkachse Eckstücke nach Art der ISO-Ecken aufweist und über Schnellverschlüsse mit der Hubeinrichtung bzw. mit der Schwenkachse lösbar verbindbar ist.

Es ist hierdurch erstmalig die Möglichkeit geschaffen worden, daß ein normaler Silokippsattelauflieger in der Weise nach- oder ausgerüstet wird, daß der Behälter mit vier Schnellverschlüssen versehen wird, so daß das Silogefäß lösbar ist und mittels Greifkanten nach UIC 592 im kombinierten Verkehr eingesetzt werden kann.

Durch diese Ausbildung ist es möglich geworden, daß bei einem an sich bekannten Silokippsattelauflieger der Behälter nach Lösung der Schnellverschlüsse auf ein anderes, insbesondere für Container vorgesehenes Transportmittel aufgesetzt wird. Dadurch wird der Einsatz von Tank- oder Silobehältern ganz universell möglich.

Vorteilhafterweise ist vorgesehen, daß der Behälter auf seiner auf den Fahrzeugrahmen auflegbaren Unterseite mindestens zwei sog. Greifkanten aufweist. Hierbei handelt es sich bevorzugterweise um Greifkanten nach UIC 592.

In seinen weiteren Ausgestaltungsmerkmalen entspricht der vorgesehene Behälter der üblichen Ausgestaltung, und es sind auch die üblichen Auflagerstützen für solche Behälter auf einem Fahrzeugrahmen vorgesehen. Durch die Anordnung der Greifkanten ist es möglich, den Behälter an sich so groß auszubilden, daß seine Außenmaße den entsprechenden Außenmaßen eines Containers entsprechen, da auf die Anordnung eines gesonderten Containerrahmens verzichtet werden kann.

Durch die Gesamtanordnung ist es auch möglich geworden, einen containerartig ausgebildeten Tank-oder Silobehälter weiterhin problemlos zur Entladung und Reinigung mittels an sich bekannter Hubeinrichtungen zu verschwenken.

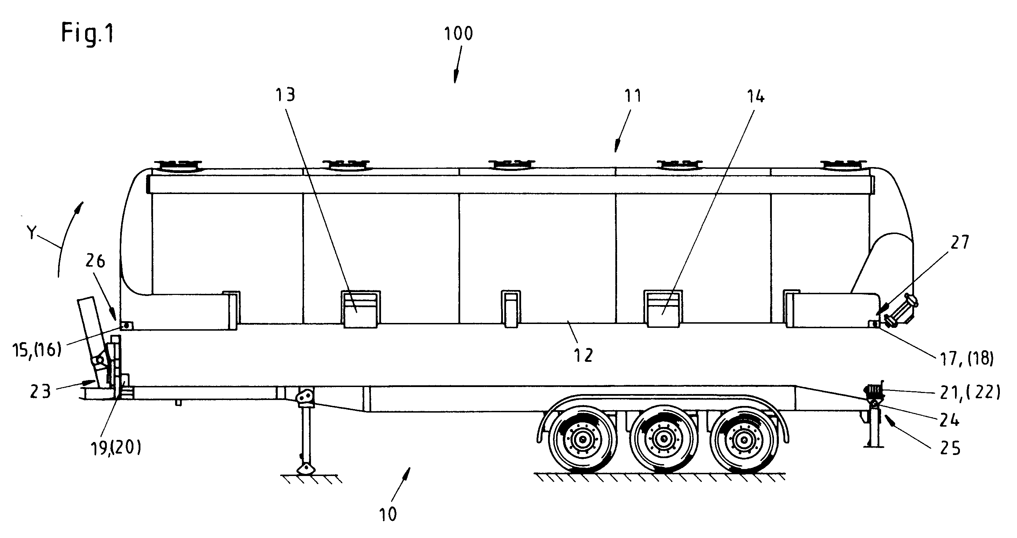

Ein Ausführungsbeispiel der Erfindung ist nachstehend anhand der Zeichnung näher erläutert.
- **Fig**. 1: zeigt dabei einen Silokippsattelauflieger, bei dem zur Verdeutlichung der Lösbarkeit der Silobehälter in abgenommenem Zustand dargestellt ist.

Der ganz allgemein als Nutzfahrzeug 100 zu bezeichnende Silokippsattelauflieger, der ohne Zugfahrzeug dargestellt ist, besteht aus einem Fahrzeugrahmen 10, an dem alle üblichen Elemente eines Silokippsattelaufliegers wie Fahrwerk, Stützen, Sattelanlagepunkt mit dem Königszapfen u. dgl. ausgebildet sind. Auf den Fahrzeugrahmen 10 wird der als Silobehälter für schütt- oder fließfähiges Gut ausgebildete Behälter 11 aufgesetzt, wobei er von in der Zeichnung nicht dargestellten Hubeinrichtungen im Bereich der Greifkanten 13,14 auf der Unterseite 12 des Silobehälters 11 erfaßt und auf den Fahrzeugrahmen 10 aufgesetzt wird. Der Silobehälter 11 ist dabei an den entsprechenden Ecken der Unterseite 12 mit Eckstücken 15,16,17,18 versehen, wobei in der Zeichnung nur die Eckstücke 15 und 18 dargestellt sind. Diese Eckstücke sind nach Art der ISO-Ecken ausgebildet und weisen entsprechende Eingreiflöcher für den Eingriff durch Schnellverschlüsse 19,20,21,22 auf, von denen die Schnellverschlüsse 19,20 entsprechenderweise an der Hubeinrichtung 23, die auf dem Fahrzeugrahmen 10 angeordnet ist, und die Eckstücke 21,22 an der Schwenkachse 24 angeordnet sind. Über die Schnellverschlüsse 19-22 wird der Silobehälter 11 auf dem Fahrzeugrahmen befestigt, wobei er bei einem Ausfahren der Hubeinrichtung 23 um die Schwenkachse 24 in Y-Richtung verschwenkbar ist.

Dadurch, daß die Schnellverschlüsse zum einen an den Angreifpunkten 26 zwischen der Hubeinrichtung 23 und dem Silobehälter 11 und an dem Verbindungspunkte 27 zwischen der Schwenkachse 24 und dem Silobehälter 11 angeordnet sind, ist es möglich, die Kraftübertragungspunkte und die Lagerungs- bzw. Festlegungspunkte zu vereinen, so daß mit der geringstmöglichsten Zahl an Verbindungsstellen der Behälter 11 auf dem Fahrzeugrahmen 10 befestigt wird, wodurch sich eine Handhabbarkeit des Behälters 11 in bezug auf seine Verschwenkbarkeit wie bei den an sich bekannten Silokippsattelaufliegern ergibt.

Dabei ist die voranstehend beschriebene Gestaltung nicht auf diesen Nutzfahrzeugtyp beschränkt. Die erfindungsgemäße Ausgestaltung kann ebenso auf Tankbehälter oder andere Ladungsbehälter Anwendung finden, wie bei anderen Fahrzeugtypen, bei denen ein Ladungsbehälter auf dem Fahrzeugrahmen abnehmbar befestigt werden soll. Die Anordnung von mehr als den zwei in der Zeichnung dargestellten Greifkanten 13,14 ist ebenso möglich, wenn dies die zu erwartenden Belastungen notwendig machen.

## Patentansprüche

1. Nutzfahrzeug (100) mit einem Behälter (11) für schütt- oder fließfähiges Gut, der mittels einer an mindestens einem Angreifpunkt (26) mit dem Behälter (11) verbindbaren Hubeinrichtung (23) gegenüber dem Fahrzeugrahmen (10) des Nutzfahrzeugs (100) um eine im Bereich der Hinterkante (25) des Fahrzeugrahmens (10) angeordnete, an Verbindungspunkten (27) mit dem Behälter (11) verbindbaren Schwenkachse (24) schwenkbar ist,
dadurch gekennzeichnet,
daß der Behälter (11) an den Angreifpunkten (26) der Hubeinrichtung (23) und an den Verbindungspunkten (27) mit der an dem Fahrzeugrahmen (10) angeordneten Schwenkachse (24) Eckstücke (15,16, 17,18) nach Art der ISO-Ecken aufweist und über Schnellverschlüsse (19,20,21,22) mit der Hubeinrichtung (23) bzw. mit der Schwenkachse (24) lösbar verbindbar ist.

2. Nutzfahrzeug nach Anspruch 1,
dadurch gekennzeichnet,
daß der Behälter (11) auf seiner auf den Fahrzeugrahmen (10) auflegbaren Unterseite (12) mindestens zwei Greifkanten (13,14) aufweist.
